# EUROPEAN PATENT APPLICATION

(11) **EP 3 690 786 A1**
(43) Date of publication of application: **05.08.2020**
(21) Application number: 17927212.5
(22) Date of filing: 28.09.2017
(51) Int. Cl.: G06Q 30/06

(54) **INFORMATION PROCESSING METHOD, PROGRAM, AND INFORMATION PROCESSING DEVICE**

(71) Applicant: Fujitsu Limited, Kawasaki-shi, Kanagawa 211-8588 (JP)
(72) Inventor: NOGAMI, Kenji, Kawasaki-shi Kanagawa 211-8588 (JP); MATSUMOTO, Yasuhide, Kawasaki-shi Kanagawa 211-8588 (JP)
(74) Representative: Hoffmann Eitle
(86) International application number: PCT/JP2017/035158
(87) International publication number: WO 2019/064406

(57) **Abstract**

According to one aspect of the present embodiment, an information processing method includes the processes of (A) searching, upon receiving a set of conditions for being provided from a terminal of a recipient of a service or a product, a first storage unit that stores a plurality of sets of conditions for providing the service or the product, for a set of conditions for providing that matches the set of conditions for being provided, (B) transmitting, in a case where no set of conditions for providing that matches the set of conditions for being provided is found, to the terminal of the recipient, a first proposal data prompting a first agreement based on a set of conditions for providing selected from the first storage unit on the basis of the set of conditions for being provided, and (C) transmitting, in a case where it is determined that the recipient has rejected the first agreement, to a terminal of a provider who has registered the selected set of conditions for providing, a second proposal data prompting a second agreement based on the set of conditions for being provided.

## Description

### FIELD

The present invention relates to a technology for mediating between a provider and a recipient of a service or a product.

### BACKGROUND

For example, Web servers may provide support for lending and borrowing of a vehicle between users. Lending and borrowing of a vehicle between users may be regarded as a form of car sharing. An activity that supports lending and borrowing of an asset between users like this is called a sharing economy. In a sharing economy, in addition to movable properties, immovable properties such as land and buildings may be lent and borrowed.

In a case of a sharing economy, anyone can be a lender, so fees can be freely set in many cases. Accordingly, even for borrowing the same type of item, different fees are set depending on the registered set of lending conditions.

However, since there are various sets of lending conditions and various sets of borrowing conditions, it is difficult to reach a sharing agreement in some cases. Note that lending and borrowing such as sharing are an example of a service, and similar circumstances may occur in providing other services and products.

### CITATION LIST

### PATENT DOCUMENT

Patent Document 1: Japanese Laid-open Patent Publication No. 2006-127285

### SUMMARY

### <TECHNICAL PROBLEM>

It is an object of the present invention in one aspect to facilitate obtaining a compromise agreement from a recipient or a provider.

### <SOLUTION TO PROBLEM>

According to one aspect of the present embodiment, an information processing method includes the processes of (A) searching, upon receiving a set of conditions for being provided from a terminal of a recipient of a service or a product, a first storage unit that stores a plurality of sets of conditions for providing the service or the product, for a set of conditions for providing that matches the set of conditions for being provided, (B) transmitting, in a case where no set of conditions for providing that matches the set of conditions for being provided is found, to the terminal of the recipient, a first proposal data prompting a first agreement based on a set of conditions for providing selected from the first storage unit on the basis of the set of conditions for being provided, and (C) transmitting, in a case where it is determined that the recipient has rejected the first agreement, to a terminal of a provider who has registered the selected set of conditions for providing, a second proposal data prompting a second agreement based on the set of conditions for being provided.

### <ADVANTAGEOUS EFFECTS OF INVENTION>

As one aspect, the present invention facilitates obtaining a compromise agreement from a recipient or a provider.

### BRIEF DESCRIPTION OF DRAWINGS

FIG. 1 is a diagram illustrating an example of a network configuration.
FIG. 2 is a diagram illustrating an example of a sequence.
FIG. 3 is a diagram illustrating an example of a lending screen.
FIG. 4 is a diagram illustrating an example of a borrowing screen.
FIG. 5 is a diagram illustrating an example of an application screen.
FIG. 6 is a diagram illustrating an example of an update screen.
FIG. 7 is a diagram illustrating an example of a sequence.
FIG. 8 is a diagram illustrating a module configuration example of a mediation server.
FIG. 9 is a diagram illustrating an example of a lender table.
FIG. 10 is a diagram illustrating an example of a borrower table.
FIG. 11 is a diagram illustrating an example of a lending condition table.
FIG. 12 is a diagram illustrating an example of a borrowing condition table.
FIG. 13 is a diagram illustrating an example of a transaction table.
FIG. 14 is a diagram illustrating a lender processing flow.
FIG. 15 is a diagram illustrating a lender processing flow.
FIG. 16 is a diagram illustrating a lender processing flow.
FIG. 17 is a diagram illustrating a first search processing flow.
FIG. 18 is a diagram illustrating a lender processing flow.
FIG. 19 is a diagram illustrating a second search processing flow.
FIG. 20 is a diagram illustrating a contract processing flow.
FIG. 21 is a diagram illustrating a lender processing flow.
FIG. 22 is a diagram illustrating a borrower processing flow.
FIG. 23 is a diagram illustrating a borrower processing flow.
FIG. 24 is a diagram illustrating a third search processing flow.
FIG. 25 is a diagram illustrating a borrower processing flow.
FIG. 26 is a diagram illustrating a fourth search processing flow.
FIG. 27 is a diagram illustrating a borrower processing flow.
FIG. 28 is a diagram illustrating an update screen processing flow.
FIG. 29 is a diagram illustrating an application screen processing flow.
FIG. 30 is a functional block diagram of a computer.

### DESCRIPTION OF EMBODIMENTS

### [First embodiment]

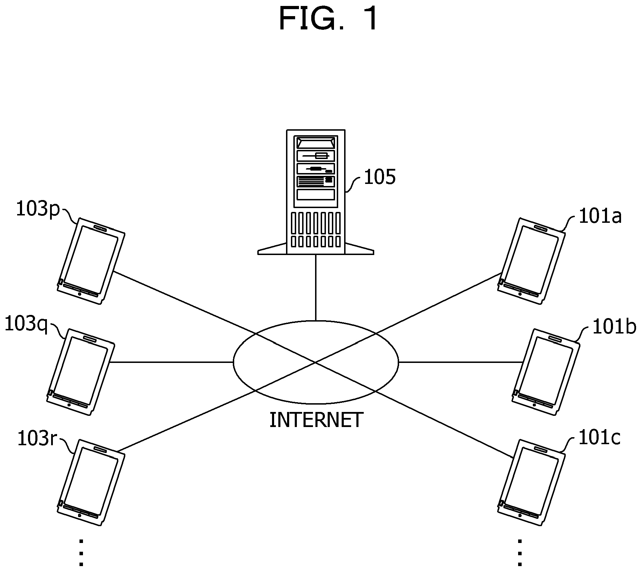

FIG. 1 illustrates an example of a network configuration. The present embodiment relates to a service for mediating lending and borrowing of vehicles. Lender terminals 101a to 101c are connected with a mediation server 105 via the Internet. The lender terminals 101a to 101c are terminals used by users who lend vehicles (hereinafter referred to as lenders). The lender terminals 101a to 101c are, for example, smartphones or personal computers. The lender terminals 101a to 101c have browsers for displaying screens on the basis of data of various screens described later.

Borrower terminals 103p to 103r are connected with the mediation server 105 via the Internet. The borrower terminals 103p to 103r are terminals used by users who borrow vehicles (hereinafter referred to as borrowers). The borrower terminals 103p to 103r are, for example, smartphones or personal computers. The borrower terminals 103p to 103r have browsers for displaying screens on the basis of data of the various screens described later.

When the mediation server 105 has received a set of lending conditions from a lender terminal 101, the mediation server 105 searches for a set of borrowing conditions that matches the set of lending conditions. Then, the mediation server 105 recommends a transaction in accordance with the set of borrowing conditions to the lender.

Furthermore, when the mediation server 105 has received a set of borrowing conditions from a borrower terminal 103, the mediation server 105 searches for a set of lending conditions that matches the set of borrowing conditions. Then, the mediation server 105 recommends a transaction in accordance with the set of lending conditions to the borrower. An example of a sequence in the present embodiment will be given below.

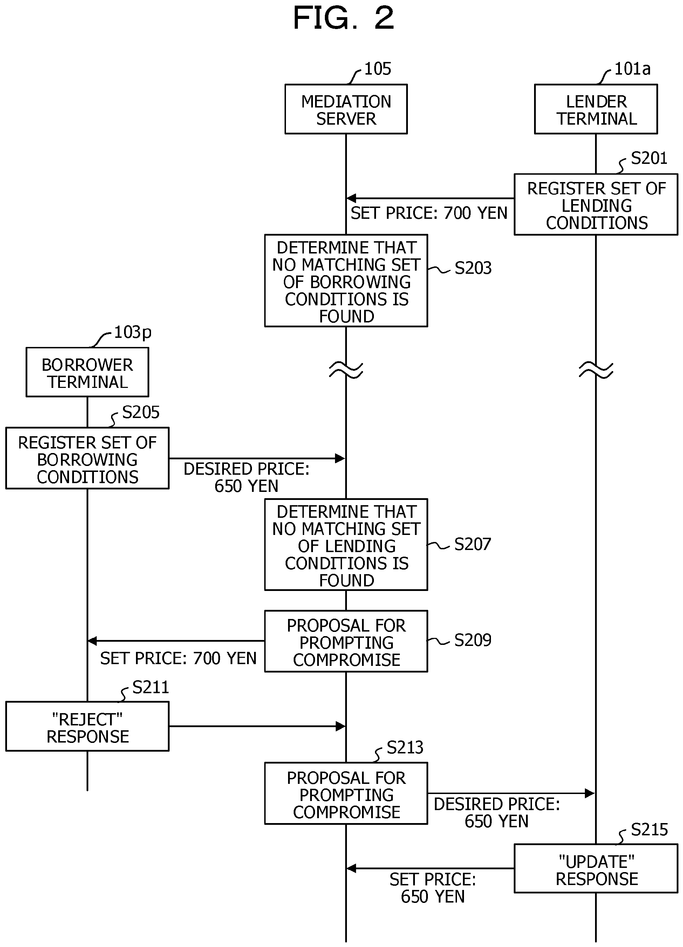

FIG. 2 illustrates the example of the sequence. The lender terminal 101a registers a set of lending conditions in the mediation server 105 (S201). Specifically, a lender inputs the set of lending conditions on a lending screen displayed on the lender terminal 101a and performs registration, and then the set of lending conditions is transmitted to the mediation server 105.

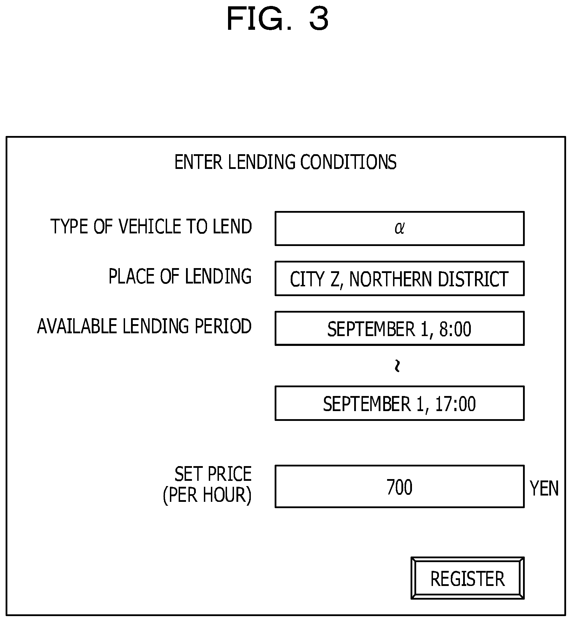

FIG. 3 illustrates an example of the lending screen displayed on the lender terminal 101a. The lending screen displays a message prompting the lender to input a set of lending conditions. The set of lending conditions in this example includes a type of vehicle to lend, a place of lending, an available lending period, and a set price.

The lending screen has an area for inputting a type of vehicle to lend. The type of vehicle to lend is the type of vehicle to be lent. In this example, the type of vehicle to lend registered in advance by the lender is displayed as an initial value. It is noted that the lender may change the type of vehicle to lend.

The lending screen has an area for inputting a place of lending. The place of lending is the place where the vehicle to be lent is. In this example, the place of lending registered in advance by the lender is displayed as an initial value. It is noted that the lender may change the place of lending.

The lending screen has an area for inputting an available lending period. The available lending period is the period for which the lender can lend the vehicle. The available lending period is specified by a start date and time and an end date and time.

The lending screen has an area for inputting a set price. The set price is the price of a rent set by the lender. That is, it means that the lender is willing to lend the vehicle for the set price. The rent in this example is assumed to be set by the hour. In the example illustrated in FIG. 3, the set price is 700 yen.

Then, when a "Register" button is selected, the type of vehicle to lend, the place of lending, the available lending period, and the set price displayed on the lending screen are transmitted to the mediation server 105. The mediation server 105 stores the received set of lending conditions.

The description returns to the description of FIG. 2. The mediation server 105 searches for a set of borrowing conditions that matches the received set of lending conditions. In this example, the mediation server 105 determines that no matching set of borrowing conditions is found (S203).

Thereafter, the borrower terminal 103p registers the set of borrowing conditions in the mediation server 105 (S205). Specifically, the borrower inputs the set of borrowing conditions on a borrowing screen displayed on the borrower terminal 103p and performs registration, and then the set of borrowing conditions is transmitted to the mediation server 105.

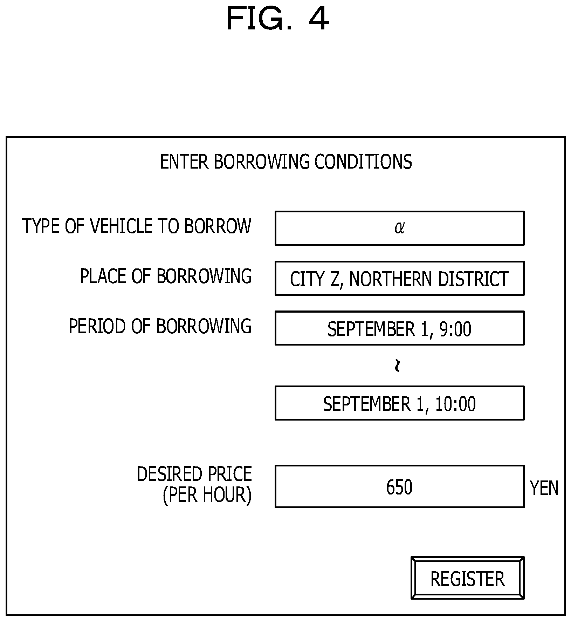

FIG. 4 illustrates an example of the borrowing screen displayed on the borrower terminal 103p. The borrowing screen displays a message prompting the borrower to input a set of borrowing conditions. The set of borrowing conditions in this example includes a type of vehicle to borrow, a place of borrowing, a period of borrowing, and a desired price.

The borrowing screen has an area for inputting a type of vehicle to borrow. The type of vehicle to borrow is the type of vehicle that the borrower wants to borrow.

The borrowing screen has an area for inputting a place of borrowing. The place of borrowing is the place where the vehicle is to be borrowed. In this example, the place of borrowing registered in advance by the borrower is displayed as an initial value. It is noted that the borrower may change the place of borrowing.

The borrowing screen has an area for inputting a period of borrowing. The period of borrowing is the period for which the borrower wants to borrow the vehicle. The period of borrowing is specified by a start date and time and an end date and time.

The borrowing screen has an area for inputting a desired price. The desired price is the price of a rent desired by the borrower. That is, it means that the borrower is willing to borrow the vehicle for the desired price or lower. In the example illustrated in FIG. 4, the desired price is 650 yen.

Then, when a "Register" button is selected, a set of borrowing conditions (the type of vehicle to borrow, the place of borrowing, the period of borrowing, and the desired price) displayed on the borrowing screen are transmitted to the mediation server 105.

The description returns to the description of FIG. 2. The mediation server 105 searches for a set of lending conditions that matches the received set of borrowing conditions. In this example, in a case of the set of lending conditions registered in S201, the type of vehicle to lend, the place of lending, and the available lending period match the set of borrowing conditions, but the set price does not match the set of borrowing conditions. Accordingly, the mediation server 105 determines that no matching set of lending conditions is found (S207).

At this time, the mediation server 105 makes a proposal for prompting the borrower to compromise (S209). In a case where a matching set of lending conditions, except for the set price, is found as in this example, the borrower is suggested to consider compromising on the desired price and accepting a transaction based on the set of lending conditions.

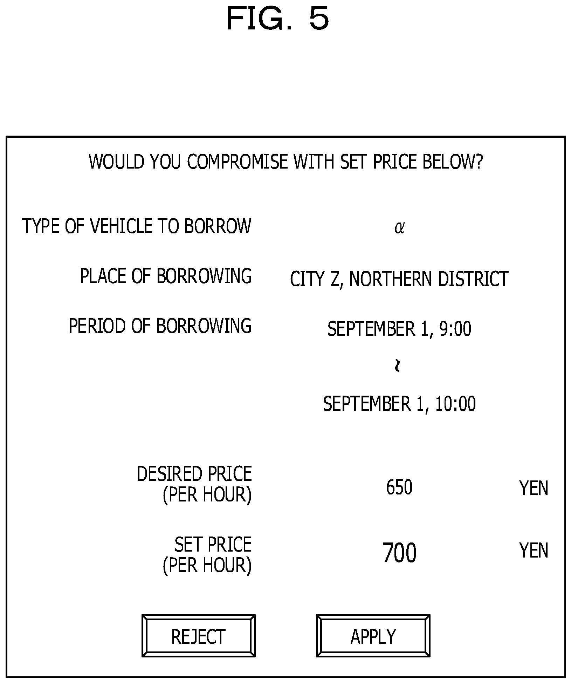

FIG. 5 illustrates an example of an application screen displayed on the borrower terminal 103p in accordance with the proposal in S209. The application screen displays a message prompting the borrower to compromise. The set of lending conditions registered in S201 satisfies conditions including the type of vehicle to borrow, the place of borrowing, and the period of borrowing. Accordingly, the type of vehicle to borrow, the place of borrowing, and the period of borrowing displayed on the application screen are as registered by the borrower. Then, the desired price registered by the borrower and the set price in the proposed set of lending conditions are displayed. This facilitates the borrower to grasp the degree of compromise on the price.

When an "Apply" button is selected, an "Apply" response is transmitted to the mediation server 105. The "Apply" response means that a transaction with the set price has been agreed.

On the other hand, when a "Reject" button is selected, a "Reject" response is transmitted to the mediation server 105. The "Reject" response means that the transaction with the set price has not been agreed.

The description returns to the description of FIG. 2. In this example, it is assumed that a "Reject" response has been transmitted from the borrower terminal 103p to the mediation server 105 (S211).

When the "Reject" response is received from the borrower terminal 103p, the mediation server 105 makes a proposal for prompting the lender to compromise (S213). In a case where a matching set of borrowing conditions, except for the set price, is found as in this example, the lender is suggested to consider compromising on the set price and accepting a transaction based on the set of borrowing conditions. That is, the lender is prompted to update the set price.

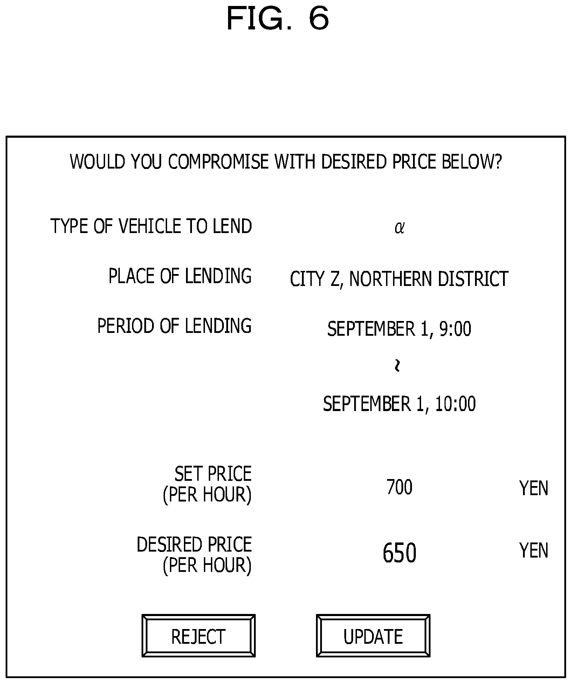

FIG. 6 illustrates an example of an update screen displayed on the lender terminal 101a in accordance with the proposal in S213. The update screen displays a message prompting the lender to compromise. The set of borrowing conditions registered in S205 satisfies conditions including the type of vehicle to lend, the place of lending, and the available lending period. Accordingly, the type of vehicle to lend and the place of lending displayed on the update screen are as registered by the lender. Furthermore, a period of lending is included in the available lending period registered by the lender, and is the same as the period of borrowing. Then, the set price registered by the lender and the desired price in the proposed set of borrowing conditions are displayed. This facilitates the lender to grasp the degree of compromise on the price.

When an "Update" button is selected, an "Update" response is transmitted to the mediation server 105. The "Update" response means that the set price has been updated to the same amount as the desired price and the transaction has been agreed.

On the other hand, when a "Reject" button is selected, a "Reject" response is transmitted to the mediation server 105. The "Reject" response means that the set price has not been updated and the transaction has not been agreed.

The description returns to the description of FIG. 2. In this example, it is assumed that an "Update" response has been transmitted from the lender terminal 101a to the mediation server 105 (S215).

Then, the mediation server 105 updates the set price from 700 yen to 650 yen, and settles a transaction between the lender and the borrower.

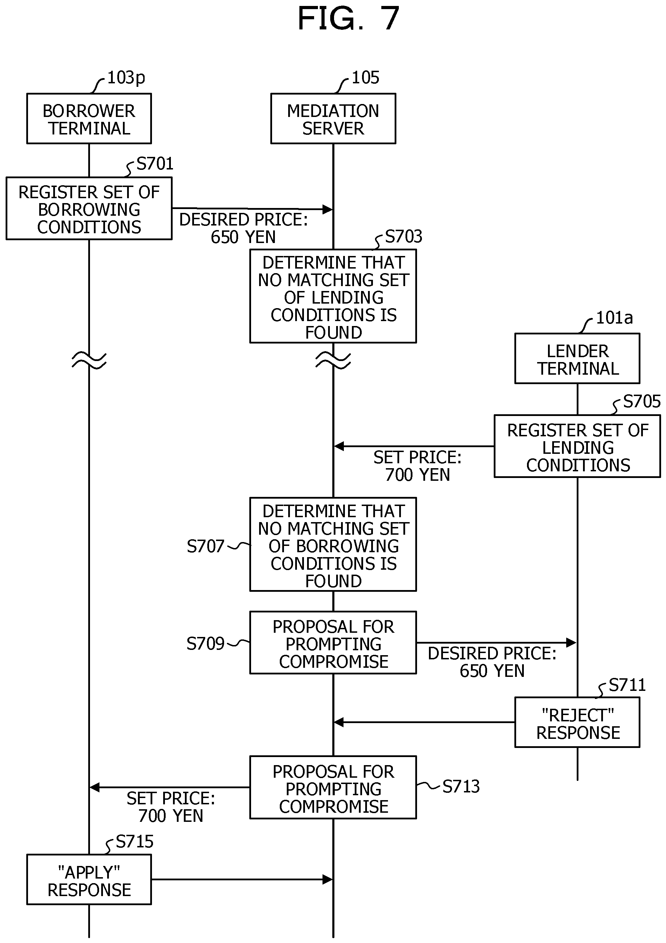

FIG. 7 illustrates another sequence example. In this example, a set of borrowing conditions is registered first. The borrower terminal 103p registers the set of borrowing conditions in the mediation server 105 (S701). As described above, the borrower inputs a set of borrowing conditions on the borrowing screen displayed on the borrower terminal 103p and performs registration, and then the set of borrowing conditions is transmitted to the mediation server 105.

The mediation server 105 searches for a set of lending conditions that matches the received set of borrowing conditions. In this example, the mediation server 105 determines that no matching set of lending conditions is found (S703).

Thereafter, the lender terminal 101a registers the set of lending conditions in the mediation server 105 (S705). As described above, the lender inputs a set of lending conditions on the lending screen displayed on the lender terminal 101a and performs registration, and then the set of lending conditions is transmitted to the mediation server 105.

The mediation server 105 searches for a set of borrowing conditions that matches the received set of lending conditions. In this example, in a case of the set of borrowing conditions registered in S701, the type of vehicle to borrow, the place of borrowing, and the period of borrowing match the set of lending conditions, but the desired price does not match the set of lending conditions. Accordingly, the mediation server 105 determines that no matching set of borrowing conditions is found (S707).

At this time, the mediation server 105 makes a proposal for prompting the lender to compromise (S709). In a case where a matching set of borrowing conditions, except for the desired price, is found as in this example, the lender is suggested to consider compromising on the set price and accepting a transaction based on the set of borrowing conditions. Data of the update screen illustrated in FIG. 6 is sent to the lender terminal 101a.

Then, in this example, it is assumed that a "Reject" response has been transmitted from the lender terminal 101a to the mediation server 105 (S711).

When the "Reject" response is received from the lender terminal 101a, the mediation server 105 makes a proposal for prompting the borrower to compromise (S713). In a case where a matching set of lending conditions, except for the desired price, is found as in this example, the borrower is suggested to consider compromising on the desired price and accepting a transaction based on the set of lending conditions. Data of the application screen illustrated in FIG. 5 is sent to the borrower terminal 103p.

In this example, it is assumed that an "Apply" response has been transmitted from the borrower terminal 103p to the mediation server 105 (S715).

Then, the mediation server 105 settles a transaction between the lender and the borrower with the set price of 700 yen.

As described above, in the present embodiment, the lender and the borrower are provided with an opportunity to compromise on the price. This facilitates settlement of a transaction. The description of an outline of the present embodiment ends here.

Operation of the mediation server 105 will be described below.

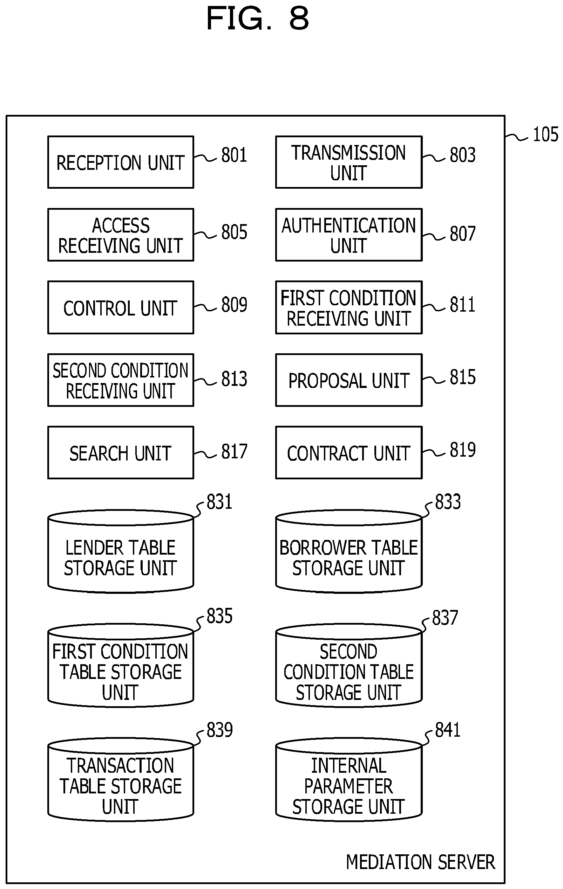

FIG. 8 illustrates a module configuration example of the mediation server 105. The mediation server 105 includes a reception unit 801, a transmission unit 803, an access receiving unit 805, an authentication unit 807, a control unit 809, a first condition receiving unit 811, a second condition receiving unit 813, a proposal unit 815, a search unit 817, and a contract unit 819.

The reception unit 801 receives various types of data. The transmission unit 803 transmits various types of data. The access receiving unit 805 receives access to predetermined uniform resource locators (URLs). The authentication unit 807 performs user authentication. The control unit 809 controls processing in the mediation server 105. The first condition receiving unit 811 receives sets of lending conditions. The second condition receiving unit 813 receives sets of borrowing conditions. The proposal unit 815 makes proposals to borrowers and lenders. The search unit 817 searches for sets of borrowing conditions and sets of lending conditions. The contract unit 819 performs contract processing based on a set of borrowing conditions and a set of lending conditions.

The mediation server 105 further includes a lender table storage unit 831, a borrower table storage unit 833, a first condition table storage unit 835, a second condition table storage unit 837, a transaction table storage unit 839, and an internal parameter storage unit 841.

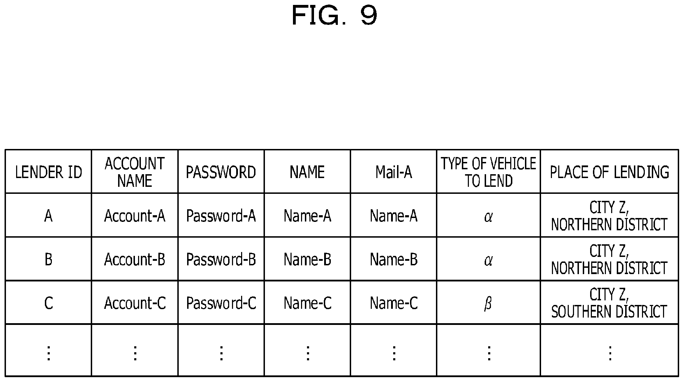

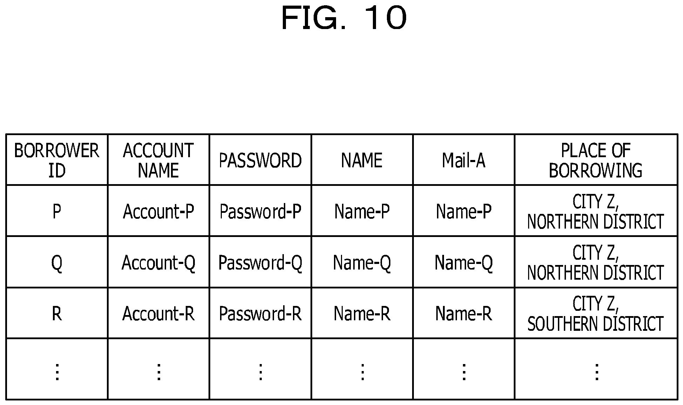

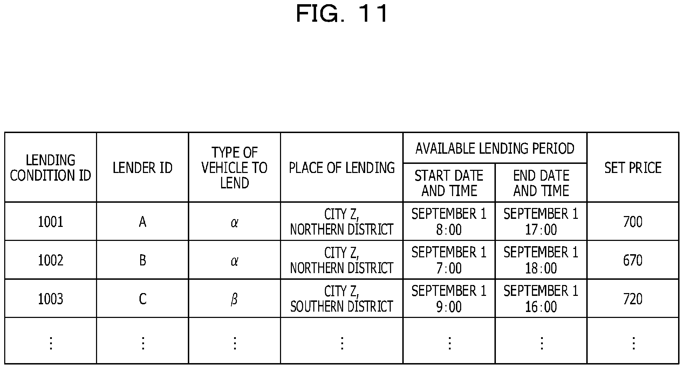

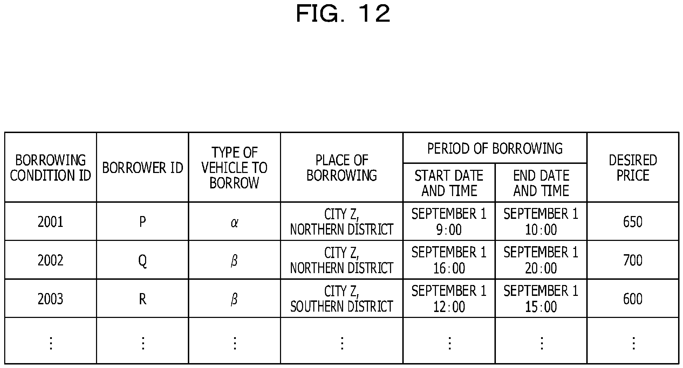

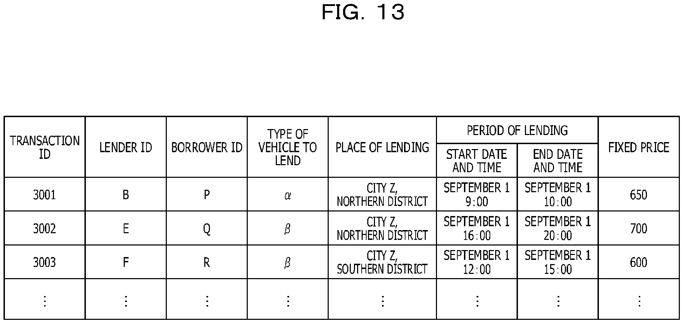

The lender table storage unit 831 stores a lender table. The lender table will be described later with reference to FIG. 9. The borrower table storage unit 833 stores a borrower table. The borrower table will be described later with reference to FIG. 10. The first condition table storage unit 835 stores a lending condition table. The lending condition table will be described later with reference to FIG. 11. The second condition table storage unit 837 stores a borrowing condition table. The borrowing condition table will be described later with reference to FIG. 12. The transaction table storage unit 839 stores a transaction table. The transaction table will be described later with reference to FIG. 13. The internal parameter storage unit 841 stores a set of borrowing conditions extracted from the borrowing condition table during first search processing and during second search processing described later. Furthermore, the internal parameter storage unit 841 stores a set of lending conditions extracted from the lending condition table during third search processing and during fourth search processing described later.

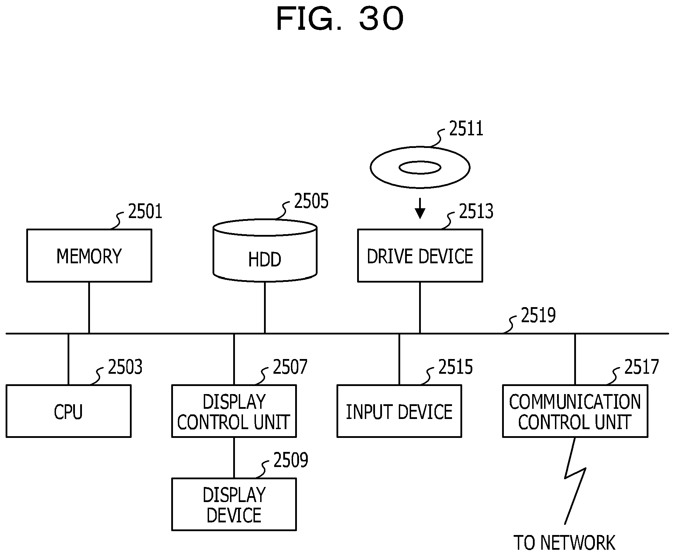

The reception unit 801, the transmission unit 803, the access receiving unit 805, the authentication unit 807, the control unit 809, the first condition receiving unit 811, the second condition receiving unit 813, the proposal unit 815, the search unit 817, and the contract unit 819 described above are implemented by using hardware resources (for example, FIG. 30) and a program that causes a central processing unit (CPU) 2503 to perform processing described below.

The lender table storage unit 831, the borrower table storage unit 833, the first condition table storage unit 835, the second condition table storage unit 837, the transaction table storage unit 839, and the internal parameter storage unit 841 described above are implemented by using hardware resources (for example, FIG. 30).

The lender table will be described. FIG. 9 illustrates an example of the lender table. The lender table in this example contains a record corresponding to a lender. The record in the lender table includes a field for storing a lender ID, a field for storing an account name, a field for storing a password, a field for storing a name, a field for storing an email address, a field for storing a type of vehicle to lend, and a field for storing a place of lending.

The lender ID identifies the lender. The account name and the password are used for user authentication of the lender. The name is the name of the lender. The email address is the lender's email address. The type of vehicle to lend and the place of lending are as described above. Note that a record of a lender is created when the lender performs user registration.

The borrower table will be described. FIG. 10 illustrates an example of the borrower table. The borrower table in this example contains a record corresponding to a borrower. The record in the borrower table includes a field for storing a borrower ID, a field for storing an account name, a field for storing a password, a field for storing a name, a field for storing an email address, and a field for storing a place of borrowing.

The borrower ID identifies the borrower. The account name and the password are used for user authentication of the borrower. The name is the name of the borrower. The email address is the borrower's email address. The place of borrowing is as described above.

The lending condition table will be described. FIG. 11 illustrates an example of the lending condition table. The lending condition table in this example contains a record corresponding to a set of lending conditions. The record in the lending condition table includes a field for storing a lending condition ID, a field for storing a lender ID, a field for storing a type of vehicle to lend, a field for storing a place of lending, an available lending period field, and a field for storing a set price.

The lending condition ID identifies the set of lending conditions. The lender ID specifies the lender who has registered the set of lending conditions. The type of vehicle to lend, the place of lending, and the available lending period are as described above. The available lending period field includes a field for storing a start date and time and a field for storing an end date and time. The set price is as described above.

The borrowing condition table will be described. FIG. 12 illustrates an example of the borrowing condition table. The borrowing condition table in this example contains a record corresponding to a set of borrowing conditions. The record in the borrowing condition table includes a field for storing a borrowing condition ID, a field for storing a borrower ID, a field for storing a type of vehicle to borrow, a field for storing a place of borrowing, a period of borrowing field, and a field for storing a desired price.

The borrowing condition ID identifies the set of borrowing conditions. The borrower ID specifies the borrower who has registered the set of borrowing conditions. The type of vehicle to borrow, the place of borrowing, and the period of borrowing are as described above. The period of borrowing field includes a field for storing a start date and time and a field for storing an end date and time. The desired price is as described above.

The transaction table will be described. FIG. 13 illustrates an example of the transaction table. The transaction table in this example contains a record corresponding to a transaction of lending and borrowing. The record in the transaction table includes a field for storing a transaction ID, a field for storing a lender ID, a field for storing a borrower ID, a field for storing a type of vehicle to lend, a field for storing a place of lending, a period of lending field, and a field for storing a fixed price.

The transaction ID identifies a transaction of lending and borrowing. The lender ID specifies the lender in the transaction. The borrower ID specifies the borrower in the transaction. The type of vehicle to lend is the type of vehicle to be lent in accordance with the transaction. The place of lending is the place where the vehicle is to be lent in accordance with the transaction. The period of lending is the period during which the vehicle is to be lent in accordance with the transaction. The period of lending field includes a field for storing a start date and time and a field for storing an end date and time. The fixed price specifies a rent for lending and borrowing in the transaction.

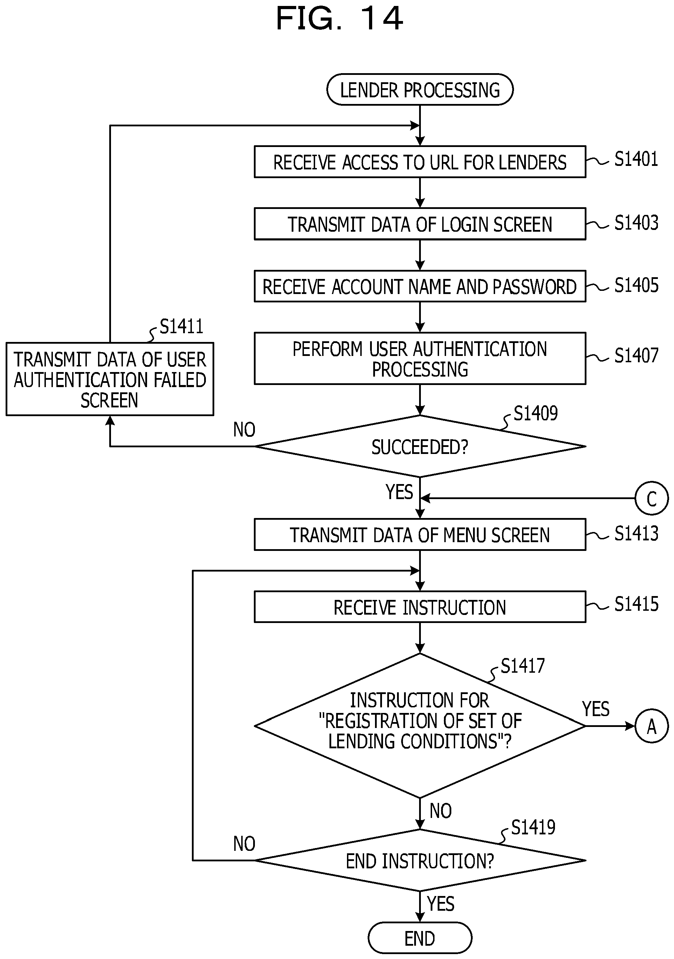

Next, processing in the mediation server 105 will be described. First, processing for the lender will be described. FIG. 14 illustrates a lender processing flow.

The access receiving unit 805 receives access to a URL for lenders via the reception unit 801 (S1401). Here, it is assumed that the lender terminal 101 accesses the URL.

The authentication unit 807 transmits data of a login screen to the lender terminal 101 via the transmission unit 803 (S1403). The login screen receives input of an account name and a password.

The reception unit 801 receives the account name and the password from the lender terminal 101 (S1405), and the authentication unit 807 obtains the account name and the password.

The authentication unit 807 performs user authentication processing on the basis of the account name and the password (S1407). The authentication unit 807 determines whether or not the account name and the password are valid, on the basis of the lender table. Furthermore, in a case where the account name and the password are valid, the authentication unit 807 specifies a lender ID corresponding to the account name and the password.

The control unit 809 determines whether or not the user authentication has succeeded (S1409). In a case where it is determined that the user authentication has failed, the control unit 809 transmits data of a user authentication failed screen to the lender terminal 101 via the transmission unit 803 (S1411). Then, the processing returns to S1401, and the above-described processing is repeated.

On the other hand, in a case where it is determined that the user authentication has succeeded, the control unit 809 transmits data of a menu screen to the lender terminal 101 via the transmission unit 803 (S1413). The menu screen receives an instruction for "registration of a set of lending conditions" and an end instruction. Here, description of other instructions on the menu screen is omitted.

The reception unit 801 receives an instruction on the menu screen from the lender terminal 101 (S1415), and the control unit 809 obtains the instruction. The control unit 809 determines whether or not an instruction for "registration of a set of lending conditions" has been obtained (S1417).

In a case where it is determined that an instruction for "registration of a set of lending conditions" has not been obtained, the control unit 809 determines whether or not an end instruction has been obtained (S1419). In a case where it is determined that an end instruction has been obtained, the lender processing ends.

In a case where it is determined that an end instruction has not been obtained, the processing returns to S1415, and the above-described processing is repeated.

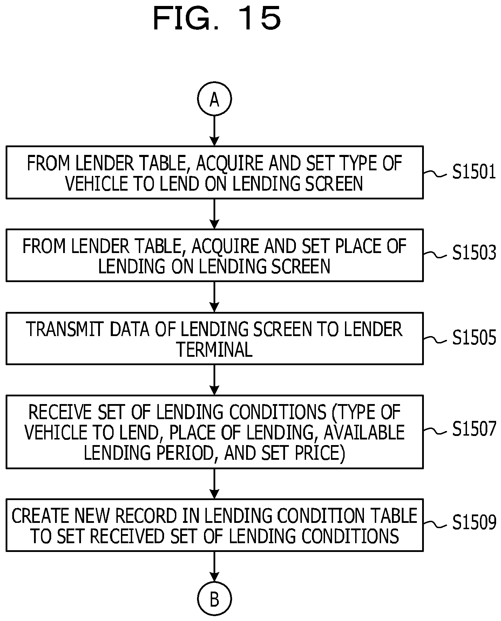

In a case where it is determined in S1417 that an instruction for "registration of a set of lending conditions" has been obtained, the processing proceeds to S1501 illustrated in FIG. 15 via a terminal A.

Now, FIG. 15 will be described. The first condition receiving unit 811 acquires, from the lender table, a type of vehicle to lend corresponding to the lender ID specified by the user authentication, and sets the type of vehicle to lend as an initial value in data of a lending screen (S1501).

In the same manner, the first condition receiving unit 811 acquires, from the lender table, a place of lending corresponding to the lender ID, and sets the place of lending as an initial value in the data of the lending screen (S1503).

Then, the first condition receiving unit 811 transmits the data of the lending screen to the lender terminal 101 via the transmission unit 803 (S1505).

Thereafter, the reception unit 801 receives a set of lending conditions (a type of vehicle to lend, a place of lending, an available lending period, and a set price) from the lender terminal 101 (S1507), and the first condition receiving unit 811 obtains the set of lending conditions. The first condition receiving unit 811 creates a new record in the lending condition table to set the received set of lending conditions (S1509). At this time, the first condition receiving unit 811 assigns a lending condition ID to the new record. Furthermore, the first condition receiving unit 811 stores, into the new record, the lender ID specified by the user authentication.

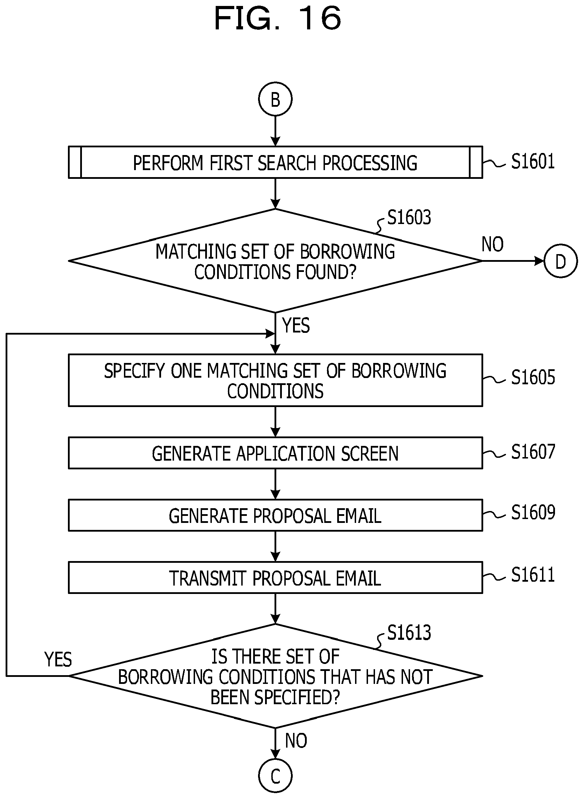

The processing proceeds to S1601 illustrated in FIG. 16 via a terminal B. The search unit 817 performs first search processing (S1601). In the first search processing, the search unit 817 searches for a set of borrowing conditions that matches the set of lending conditions received in S1507 in FIG. 15.

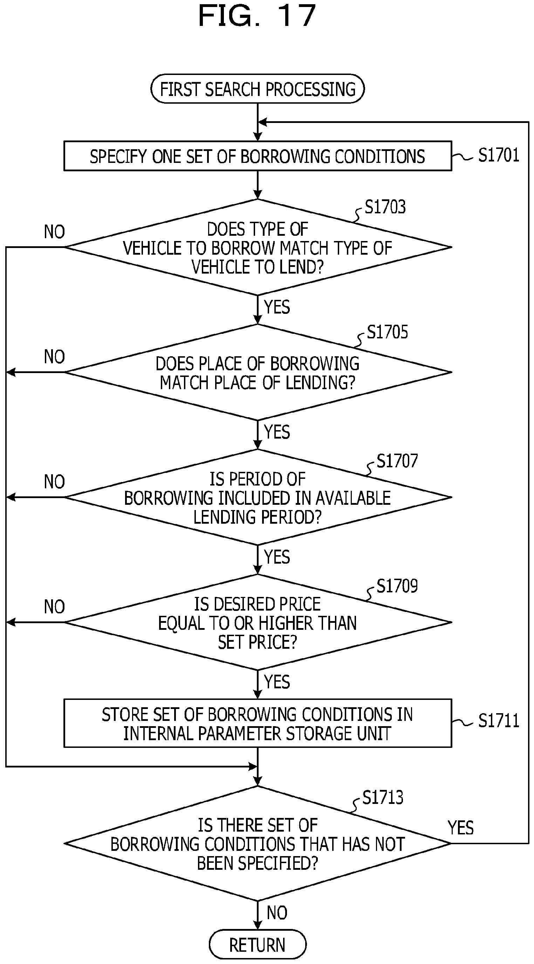

FIG. 17 illustrates a first search processing flow. The search unit 817 specifies one set of borrowing conditions in the borrowing condition table (S1701). Specifically, the search unit 817 specifies one record in the borrowing condition table.

The search unit 817 determines whether or not the type of vehicle to borrow in the specified set of borrowing conditions matches the type of vehicle to lend in the set of lending conditions received in S1507 in FIG. 15 (S1703). In a case where it is determined that the type of vehicle to borrow does not match the type of vehicle to lend, the processing proceeds to S1713.

On the other hand, in a case where it is determined that the type of vehicle to borrow matches the type of vehicle to lend, the search unit 817 determines whether or not the place of borrowing in the specified set of borrowing conditions matches the place of lending in the set of lending conditions described above (S1705). In a case where it is determined that the place of borrowing does not match the place of lending, the processing proceeds to S1713.

On the other hand, in a case where it is determined that the place of borrowing matches the place of lending, the search unit 817 determines whether or not the period of borrowing in the specified set of borrowing conditions is included in the available lending period in the set of lending conditions described above (S1707). In a case where it is determined that the period of borrowing is not included in the available lending period, the processing proceeds to S1713.

On the other hand, in a case where it is determined that the period of borrowing is included in the available lending period, the search unit 817 determines whether or not the desired price in the specified set of borrowing conditions is equal to or higher than the set price in the set of lending conditions described above (S1709). In a case where it is determined that the desired price is lower than the set price, the processing proceeds to S1713.

On the other hand, in a case where it is determined that the desired price is equal to or higher than the set price, the search unit 817 stores the specified set of borrowing conditions in the internal parameter storage unit 841 (S1711).

The search unit 817 determines whether or not there is a set of borrowing conditions that has not been specified in S1701 (S1713). In a case where it is determined that there is a set of borrowing conditions that has not been specified, the processing returns to S1701, and the above-described processing is repeated.

On the other hand, in a case where it is determined that there is no set of borrowing conditions that has not been specified, the first search processing ends and the processing returns to the calling lender processing.

The description returns to the description of FIG. 16. The proposal unit 815 determines whether or not a matching set of borrowing conditions has been found as a result of the first search processing (S1603). Specifically, the proposal unit 815 determines whether or not a set of borrowing conditions has been stored in the internal parameter storage unit 841 in the first search processing.

In a case where it is determined that a matching set of borrowing conditions has been found, the proposal unit 815 specifies one matching set of borrowing conditions (S1605). Specifically, the proposal unit 815 specifies one set of borrowing conditions that has been stored in the internal parameter storage unit 841 in the first search processing.

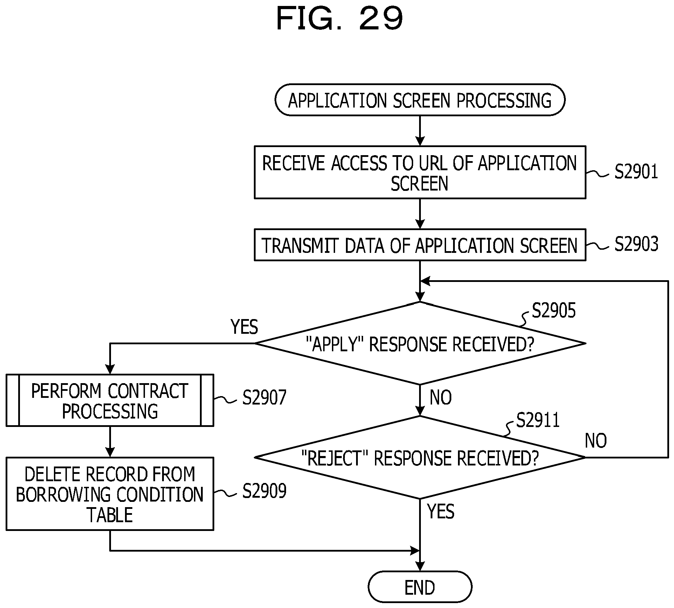

The proposal unit 815 generates data of an application screen on the basis of the specified set of borrowing conditions (S1607). The application screen generated at this time displays the registered set of borrowing conditions and receives an application operation by a user. At this time, the proposal unit 815 activates application screen processing. The application screen processing will be described later with reference to FIG. 29.

Moreover, the proposal unit 815 generates a proposal email with a link to the application screen (S1609). That is, the proposal email contains a URL of the application screen. The proposal email contains a message stating that a set of lending conditions that satisfies the set of borrowing conditions has been registered.

The proposal unit 815 transmits, via the transmission unit 803, the proposal email to the borrower terminal 103 corresponding to the set of borrowing conditions (S1611). Specifically, the email, with the borrower's email address set as a destination, is sent to an email server.

The proposal unit 815 determines whether or not there is a set of borrowing conditions that has not been specified in S1605 (S1613). In a case where it is determined that there is a set of borrowing conditions that has not been specified, the processing returns to S1605, and the above-described processing is repeated.

On the other hand, in a case where it is determined that there is no set of borrowing conditions that has not been specified, the processing returns to S1413 in FIG. 14 via a terminal C, and the above-described processing is repeated.

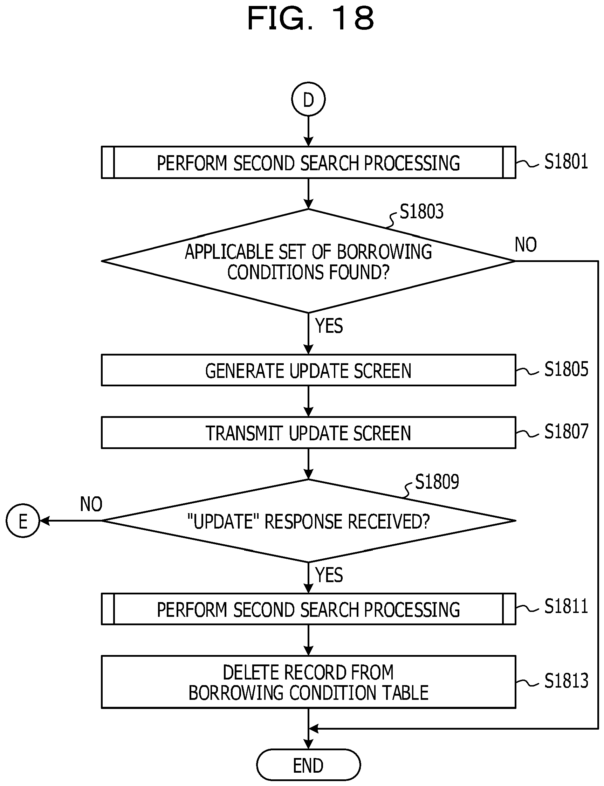

Furthermore, in a case where it is determined in S1603 that no matching set of borrowing conditions has been found, the processing proceeds to S1801 illustrated in FIG. 18 via a terminal D.

The search unit 817 performs second search processing (S1801). In the second search processing, the search unit 817 searches for a set of borrowing conditions that is satisfying except for the desired price.

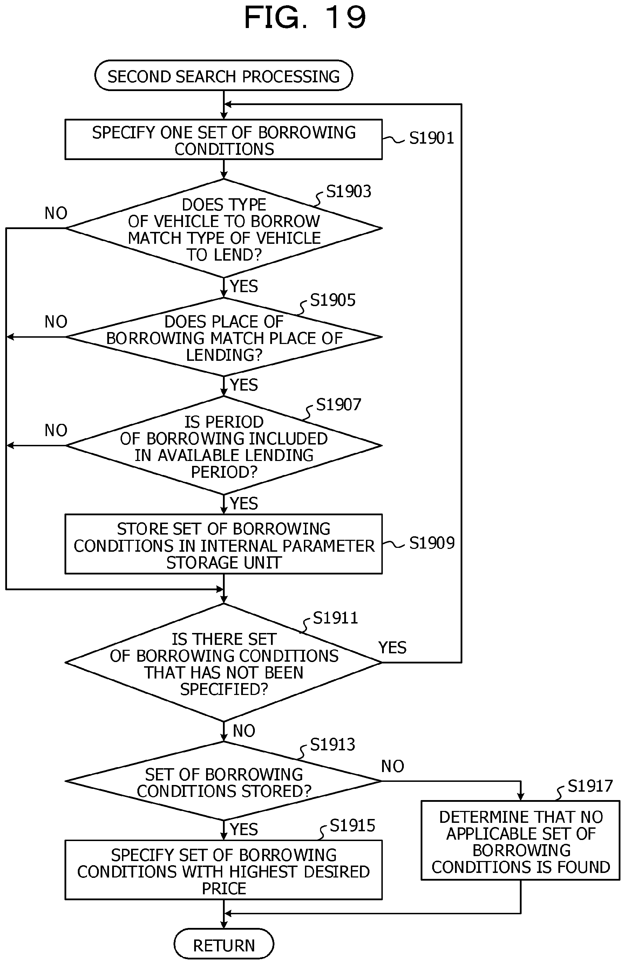

FIG. 19 illustrates a second search processing flow. The search unit 817 specifies one set of borrowing conditions in the borrowing condition table (S1901). Specifically, the search unit 817 specifies one record in the borrowing condition table.

The search unit 817 determines whether or not the type of vehicle to borrow in the specified set of borrowing conditions matches the type of vehicle to lend in the set of lending conditions received in S1507 in FIG. 15 (S1903). In a case where it is determined that the type of vehicle to borrow does not match the type of vehicle to lend, the processing proceeds to S1911.

On the other hand, in a case where it is determined that the type of vehicle to borrow matches the type of vehicle to lend, the search unit 817 determines whether or not the place of borrowing in the specified set of borrowing conditions matches the place of lending in the set of lending conditions described above (S1905). In a case where it is determined that the place of borrowing does not match the place of lending, the processing proceeds to S1911.

On the other hand, in a case where it is determined that the place of borrowing matches the place of lending, the search unit 817 determines whether or not the period of borrowing in the specified set of borrowing conditions is included in the available lending period in the set of lending conditions described above (S1907). In a case where it is determined that the period of borrowing is not included in the available lending period, the processing proceeds to S1911.

On the other hand, in a case where it is determined that the period of borrowing is included in the available lending period, the search unit 817 stores the specified set of borrowing conditions in the internal parameter storage unit 841 (S1909).

The search unit 817 determines whether or not there is a set of borrowing conditions that has not been specified in S1901 (S1911). In a case where it is determined that there is a set of borrowing conditions that has not been specified, the processing returns to S1901, and the above-described processing is repeated.

On the other hand, in a case where it is determined that there is no set of borrowing conditions that has not been specified, the search unit 817 determines whether or not a set of borrowing conditions has been stored in the internal parameter storage unit 841 (S1913).

In a case where it is determined that a set of borrowing conditions has been stored in the internal parameter storage unit 841, the search unit 817 specifies a set of borrowing conditions with the highest desired price among sets of borrowing conditions that have been stored (S1915). Then, the second search processing ends, and the processing returns to the lender processing.

On the other hand, in a case where it is determined that no set of borrowing conditions has been stored in the internal parameter storage unit 841, the search unit 817 determines that no applicable set of borrowing conditions is found (S1917). Then, the second search processing ends, and the processing returns to the lender processing.

Now, FIG. 18 will be described. The proposal unit 815 determines whether or not an applicable set of borrowing conditions has been found as a result of the second search processing (S1803).

In a case where it is determined that no applicable set of borrowing conditions has been found, the lender processing ends as it is. On the other hand, in a case where it is determined that an applicable set of borrowing conditions has been found, the proposal unit 815 generates data of an update screen (S1805). For example, the data of the update screen illustrated in FIG. 6 is generated.

The proposal unit 815 transmits the data of the update screen to the lender terminal 101 via the transmission unit 803 (S1807). Thereafter, the proposal unit 815 determines whether or not the reception unit 801 has received an "Update" response from the lender terminal 101 (S1809).

In a case where it is determined that an "Update" response has been received from the lender terminal 101, the contract unit 819 performs contract processing (S1811). In the contract processing, the contract unit 819 settles a transaction on the basis of the applicable set of borrowing conditions described above.

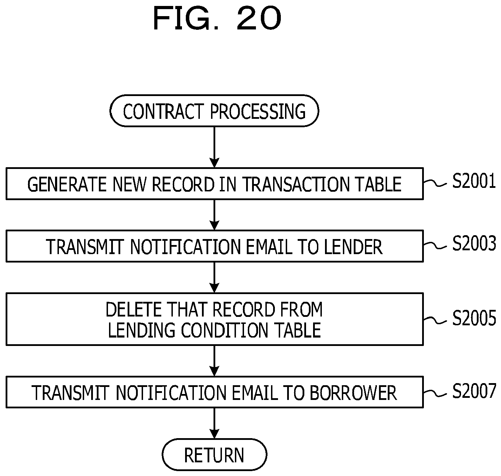

FIG. 20 illustrates a contract processing flow. The contract unit 819 generates a new record in the transaction table (S2001). At this time, the contract unit 819 assigns a transaction ID to the new record. Furthermore, the lender ID field stores the lender ID specified by the user authentication. The borrower ID field stores the borrower ID corresponding to the applicable set of borrowing conditions described above. The type of vehicle to lend field stores the type of vehicle to borrow in the set of borrowing conditions. The place of lending field stores the place of borrowing in the set of borrowing conditions. The start date and time field for the period of lending stores the start date and time of the period of borrowing. The end date and time field for the period of lending stores the end date and time of the period of borrowing. The fixed price field stores the desired price in the set of borrowing conditions.

The contract unit 819 transmits a notification email to the email address corresponding to the lender ID via the transmission unit 803 (S2003). The notification email contains a message stating that a transaction has been settled with the updated set price.

The contract unit 819 deletes the record of the set of lending conditions created in the lending condition table in S1509 in FIG. 15 (S2005). It is noted that the contract unit 819 may revise the available lending period in the applicable set of lending conditions described above, instead of deleting the record.

The contract unit 819 transmits a notification email to the email address corresponding to the borrower ID via the transmission unit 803 (S2007). The notification email contains a message stating that a transaction based on the registered set of borrowing conditions has been settled. When the contract processing ends, the processing returns to the calling lender processing.

The description returns to the description of FIG. 18. The contract unit 819 deletes the record of the applicable set of borrowing conditions described above from the borrowing condition table (S1813). Then, the lender processing ends.

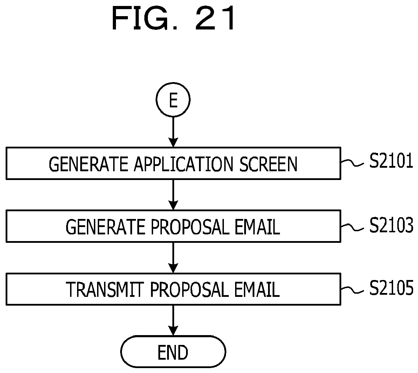

In a case where it is determined in S1809 that an "Update" response has not been received from the lender terminal 101, that is, in a case where a "Reject" response has been received, the processing proceeds to S2101 illustrated in FIG. 21 via a terminal E.

The proposal unit 815 generates the data of the application screen illustrated in FIG. 5 on the basis of the set of borrowing conditions determined to be applicable in S1803 in FIG. 18 (S2101). At this time, the proposal unit 815 activates application screen processing. The application screen processing will be described later with reference to FIG. 29.

Moreover, the proposal unit 815 generates a proposal email with a link to the application screen (S2103). That is, the proposal email contains a URL of the application screen. The proposal email contains a message stating that a set of lending conditions that satisfies the set of borrowing conditions, except for the desired price, has been registered.

The proposal unit 815 transmits the proposal email to the borrower terminal 103 corresponding to the set of borrowing conditions via the transmission unit 803 (S2105). Specifically, the email, with the borrower's email address set as a destination, is sent to the email server. Then, the lender processing ends.

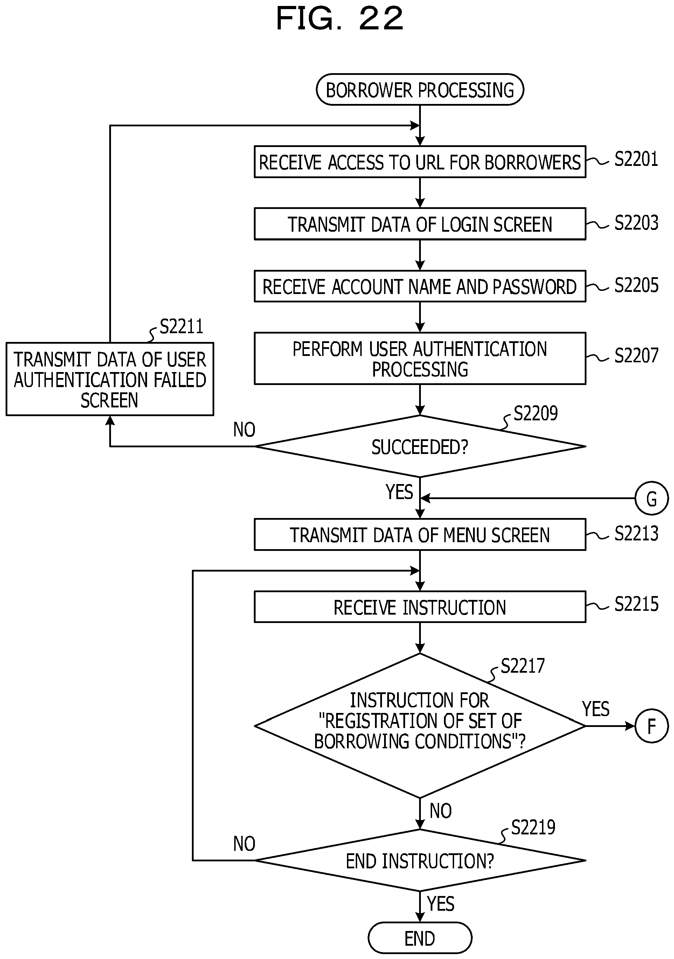

Next, processing for the borrower will be described. FIG. 22 illustrates a borrower processing flow.

The access receiving unit 805 receives access to a URL for borrowers via the reception unit 801 (S2201). Here, it is assumed that the borrower terminal 103 accesses the URL.

The authentication unit 807 transmits data of a login screen to the lender terminal 101 via the transmission unit 803 (S2203). The login screen receives input of an account name and a password.

The reception unit 801 receives the account name and the password from the lender terminal 101 (S2205), and the authentication unit 807 obtains the account name and the password.

The authentication unit 807 performs user authentication processing on the basis of the account name and the password (S2207). The authentication unit 807 determines whether or not the account name and the password are valid, on the basis of the borrower table. Furthermore, in a case where the account name and the password are valid, the authentication unit 807 specifies a borrower ID.

The control unit 809 determines whether or not the user authentication has succeeded (S2209). In a case where it is determined that the user authentication has failed, the control unit 809 transmits data of a user authentication failed screen to the borrower terminal 103 via the transmission unit 803 (S2211). Then, the processing returns to S2201, and the above-described processing is repeated.

On the other hand, in a case where it is determined that the user authentication has succeeded, the control unit 809 transmits data of a menu screen to the borrower terminal 103 via the transmission unit 803 (S2213). The menu screen receives an instruction for "registration of a set of borrowing conditions" and an end instruction. Here, description of other instructions on the menu screen is omitted.

The reception unit 801 receives an instruction on the menu screen from the borrower terminal 103 (S2215), and the control unit 809 obtains the instruction. The control unit 809 determines whether or not an instruction for "registration of a set of borrowing conditions" has been obtained (S2217).

In a case where it is determined that an instruction for "registration of a set of borrowing conditions" has not been obtained, the control unit 809 determines whether or not an end instruction has been obtained (S2219). In a case where it is determined that an end instruction has been obtained, the borrower processing ends.

In a case where it is determined that an end instruction has not been obtained, the processing returns to S2215, and the above-described processing is repeated.

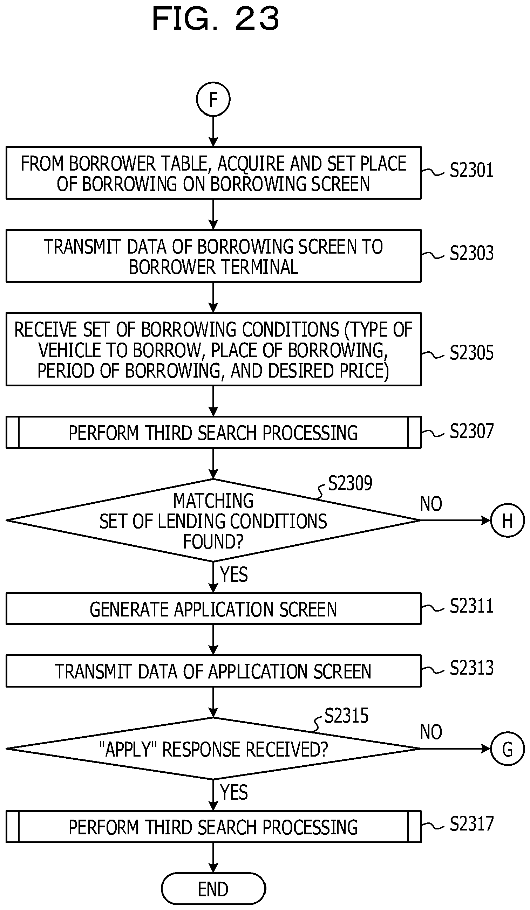

In a case where it is determined in S2217 that an instruction for "registration of a set of borrowing conditions" has been obtained, the processing proceeds to S2301 illustrated in FIG. 23 via a terminal F.

Now, FIG. 23 will be described. The second condition receiving unit 813 acquires, from the borrower table, a place of borrowing corresponding to the borrower ID specified by the user authentication, and sets the type of vehicle to lend as an initial value in data of a borrowing screen (S2301).

The second condition receiving unit 813 transmits the data of the borrowing screen to the borrower terminal 103 via the transmission unit 803 (S2303).

The reception unit 801 receives a set of borrowing conditions (a type of vehicle to borrow, a place of borrowing, a period of borrowing, and a desired price) (S2305), and the second condition receiving unit 813 obtains the set of borrowing conditions.

The search unit 817 performs third search processing (S2307). In the third search processing, the search unit 817 searches for a set of lending conditions that matches the set of borrowing conditions received in S2305 in FIG. 23.

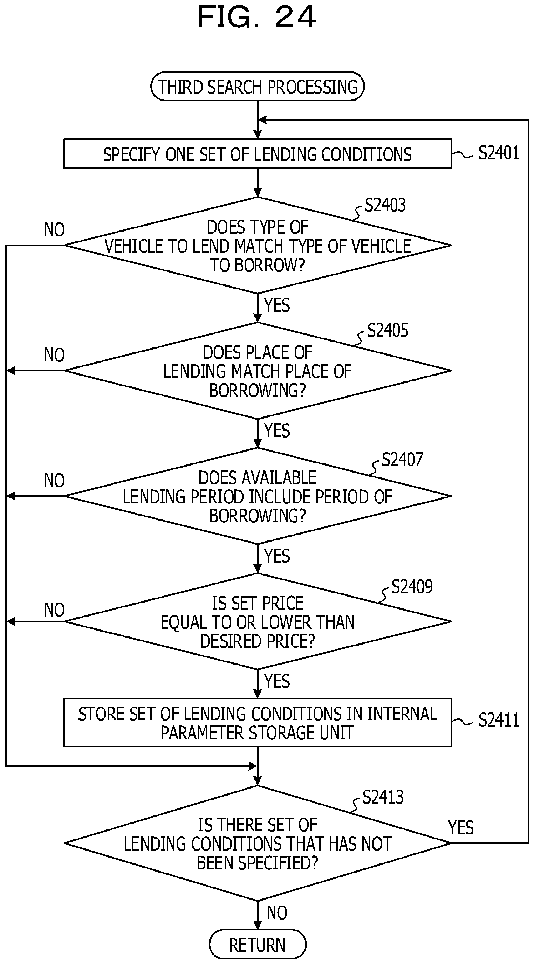

FIG. 24 illustrates a third search processing flow. The search unit 817 specifies one set of lending conditions in the lending condition table (S2401). Specifically, the search unit 817 specifies one record in the lending condition table.

The search unit 817 determines whether or not the type of vehicle to lend in the specified set of lending conditions matches the type of vehicle to borrow in the set of borrowing conditions received in S2305 in FIG. 23 (S2403). In a case where it is determined that the type of vehicle to lend does not match the type of vehicle to borrow, the processing proceeds to S2413.

On the other hand, in a case where it is determined that the type of vehicle to lend matches the type of vehicle to borrow, the search unit 817 determines whether or not the place of lending in the specified set of lending conditions matches the place of borrowing in the set of borrowing conditions described above (S2405). In a case where it is determined that the place of lending does not match the place of borrowing, the processing proceeds to S2413.

On the other hand, in a case where it is determined that the place of lending matches the place of borrowing, the search unit 817 determines whether or not the available lending period in the specified set of lending conditions includes the period of borrowing in the set of borrowing conditions described above (S2407). In a case where it is determined that the available lending period does not include the period of borrowing, the processing proceeds to S2413.

On the other hand, in a case where it is determined that the available lending period includes the period of borrowing, the search unit 817 determines whether or not the set price in the specified set of lending conditions is equal to or lower than the desired price in the set of borrowing conditions described above (S2409). In a case where it is determined that the set price exceeds the desired price, the processing proceeds to S2413.

On the other hand, in a case where it is determined that the set price is equal to or lower than the desired price, the search unit 817 stores the specified set of lending conditions in the internal parameter storage unit 841 (S2411).

The search unit 817 determines whether or not there is a set of lending conditions that has not been specified in S2401 (S2413). In a case where it is determined that there is a set of lending conditions that has not been specified, the processing returns to S2401, and the above-described processing is repeated. On the other hand, in a case where it is determined that there is no set of lending conditions that has not been specified, the third search processing ends and the processing returns to the calling borrower processing.

The description returns to the description of FIG. 23. The proposal unit 815 determines whether or not a matching set of lending conditions has been found as a result of the third search processing (S2309). Specifically, the proposal unit 815 determines whether or not a set of lending conditions has been stored in the internal parameter storage unit 841 in the third search processing.

In a case where it is determined that a matching set of lending conditions has been found, the proposal unit 815 generates data of an application screen for the matching set of lending conditions (S2311). The data of the application screen illustrated in FIG. 5 is generated. Note that in a case where a plurality of matching sets of lending conditions is found, the proposal unit 815 selects one set of lending conditions and generates data of an application screen for the one set of lending conditions. Any method can be used to select one set of lending conditions. For example, the proposal unit 815 may select a set of lending conditions with the lowest set price.

The proposal unit 815 transmits the data of the application screen to the borrower terminal 103 via the transmission unit 803 (S2313).

The proposal unit 815 determines whether or not the reception unit 801 has received an "Apply" response from the borrower terminal 103 within a certain period of time (S2315). In a case where it is determined that the reception unit 801 has received an "Apply" response from the borrower terminal 103, the contract unit 819 performs contract processing (S2317). In the contract processing, the contract unit 819 settles a transaction on the basis of the set of borrowing conditions received in S2305 in FIG. 23 and the matching set of lending conditions described above.

As illustrated in FIG. 20, the contract unit 819 generates a new record in the transaction table (S2001). At this time, the contract unit 819 assigns a transaction ID to the new record. Furthermore, the lender ID field stores the lender ID corresponding to the matching set of lending conditions described above. The borrower ID field stores the borrower ID specified by the user authentication. The type of vehicle to lend field stores the type of vehicle to borrow in the set of borrowing conditions. The place of lending field stores the place of borrowing in the set of borrowing conditions. The start date and time field for the period of lending stores the start date and time of the period of borrowing. The end date and time field for the period of lending stores the end date and time of the period of borrowing. The fixed price field stores the set price in the matching set of lending conditions described above.

The contract unit 819 transmits a notification email to the email address corresponding to the lender ID via the transmission unit 803 (S2003). The notification email contains a message stating that a transaction has been settled with the set price in the matching set of lending conditions described above.

The contract unit 819 deletes the record of the set of lending conditions described above from the lending condition table (S2005). It is noted that the contract unit 819 may revise the available lending period in the applicable set of lending conditions described above, instead of deleting the record.

The contract unit 819 transmits a notification email to the email address corresponding to the borrower ID via the transmission unit 803 (S2007). The notification email contains a message stating that a transaction based on the received set of borrowing conditions has been settled. When the contract processing ends, the processing returns to the calling borrower processing.

The description returns to the description of FIG. 23. When the processing returns from the contract processing, the borrower processing ends.

In a case where it is determined in S2315 that the reception unit 801 has not received an "Apply" response from the borrower terminal 103, that is, in a case where a "Reject" response has been received, the processing returns to S2213 illustrated in FIG. 22 via a terminal G.

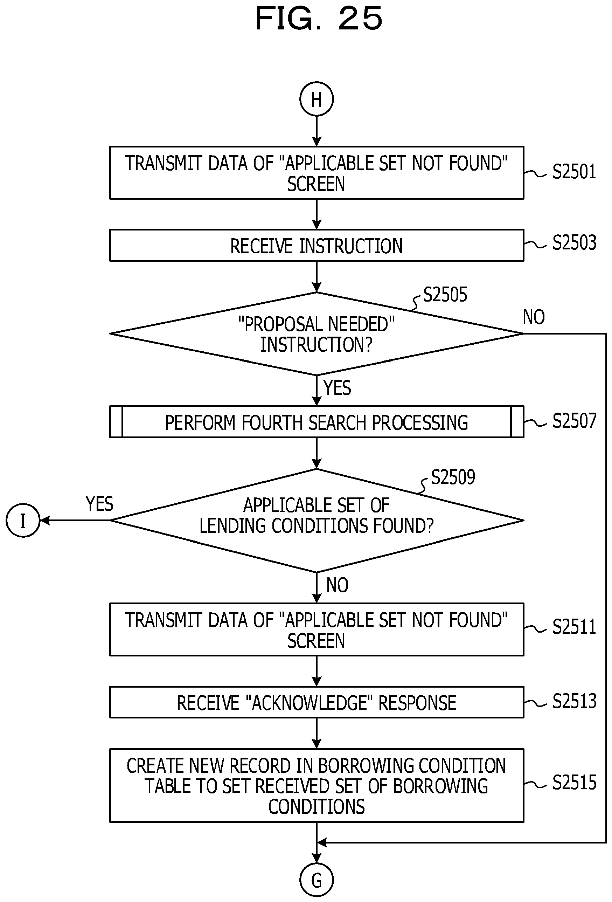

Furthermore, in a case where it is determined in S2309 that no matching set of lending conditions has been found, the processing proceeds to S2501 illustrated in FIG. 25 via a terminal H.

Now, FIG. 25 will be described. The proposal unit 815 transmits data of an "applicable set not found" screen to the borrower terminal 103 via the transmission unit 803 (S2501). The "applicable set not found" screen displays a message stating that no set of lending conditions that matches the set of borrowing conditions has been registered. Furthermore, the "applicable set not found" screen receives a "proposal needed" instruction and a "proposal not needed" instruction.

The reception unit 801 receives an instruction on the "applicable set not found" screen from the borrower terminal 103 (S2503), and the proposal unit 815 obtains the received instruction. The proposal unit 815 determines whether or not a "proposal needed" instruction has been obtained (S2505). In a case where it is determined that a "proposal needed" instruction has not been obtained, that is, in a case where a "proposal not needed" instruction has been obtained, the processing returns to S2213 illustrated in FIG. 22 via the terminal G.

On the other hand, in a case where it is determined that a "proposal needed" instruction has been obtained, the search unit 817 performs fourth search processing (S2507). In the fourth search processing, the search unit 817 searches for a set of lending conditions that is satisfying except for the set price. Note that the processing may skip S2501 to S2505 and proceed to S2507 from the terminal H.

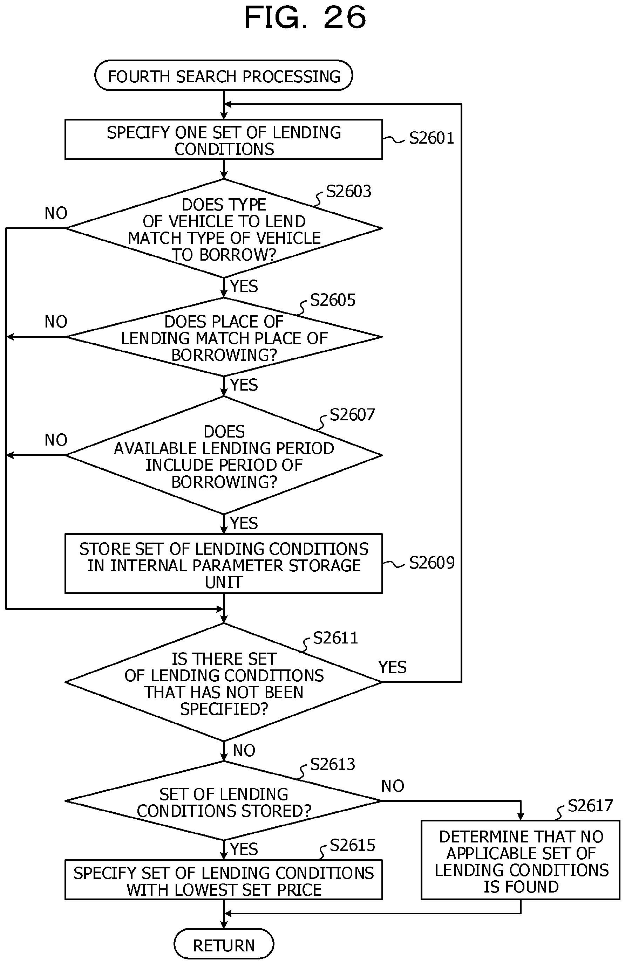

FIG. 26 illustrates a fourth search processing flow. The search unit 817 specifies one set of lending conditions in the lending condition table (S2601). Specifically, the search unit 817 specifies one record in the lending condition table.

The search unit 817 determines whether or not the type of vehicle to lend in the specified set of lending conditions matches the type of vehicle to borrow in the set of borrowing conditions received in S2305 in FIG. 23 (S2603). In a case where it is determined that the type of vehicle to lend does not match the type of vehicle to borrow, the processing proceeds to S2611.

On the other hand, in a case where it is determined that the type of vehicle to lend matches the type of vehicle to borrow, the search unit 817 determines whether or not the place of lending in the specified set of lending conditions matches the place of borrowing in the set of borrowing conditions described above (S2605). In a case where it is determined that the place of lending does not match the place of borrowing, the processing proceeds to S2611.

On the other hand, in a case where it is determined that the place of lending matches the place of borrowing, the search unit 817 determines whether or not the available lending period in the specified set of lending conditions includes the period of borrowing in the set of borrowing conditions described above (S2607). In a case where it is determined that the available lending period does not include the period of borrowing, the processing proceeds to S2611.

On the other hand, in a case where it is determined that the available lending period includes the period of borrowing, the search unit 817 stores the specified set of lending conditions in the internal parameter storage unit 841 (S2609).

The search unit 817 determines whether or not there is a set of lending conditions that has not been specified in S2601 (S2611). In a case where it is determined that there is a set of lending conditions that has not been specified, the processing returns to S2601, and the above-described processing is repeated.

On the other hand, in a case where it is determined that there is no set of lending conditions that has not been specified, the search unit 817 determines whether or not a set of lending conditions has been stored in the internal parameter storage unit 841 (S2613).

In a case where it is determined that a set of lending conditions has been stored in the internal parameter storage unit 841, the search unit 817 specifies a set of lending conditions with the lowest set price among sets of lending conditions that have been stored (S2615). Then, the fourth search processing ends, and the processing returns to the borrower processing.

On the other hand, in a case where it is determined that no set of lending conditions has been stored in the internal parameter storage unit 841, the search unit 817 determines that no applicable set of lending conditions is found (S2617). Then, the fourth search processing ends, and the processing returns to the borrower processing.

The description returns to the description of FIG. 25. The proposal unit 815 determines whether or not an applicable set of lending conditions has been found as a result of the fourth search processing (S2509).

In a case where it is determined that no applicable set of lending conditions has been found, the proposal unit 815 transmits data of an "applicable set not found" screen to the borrower terminal 103 via the transmission unit 803 (S2511). The "applicable set not found" screen displays a message stating that there is no set of lending conditions to be proposed. Furthermore, the "applicable set not found" screen receives an acknowledge operation by a user.

The proposal unit 815 waits for an "Acknowledge" response to be received by the reception unit 801 (S2513), and creates a new record in the borrowing condition table to set the set of borrowing conditions received in S2305 in FIG. 23 (S2515). At this time, the proposal unit 815 assigns a borrowing condition ID to the new record. Furthermore, the proposal unit 815 stores, into the new record, the borrower ID specified by the user authentication. The processing returns to S2213 illustrated in FIG. 22 via the terminal G.

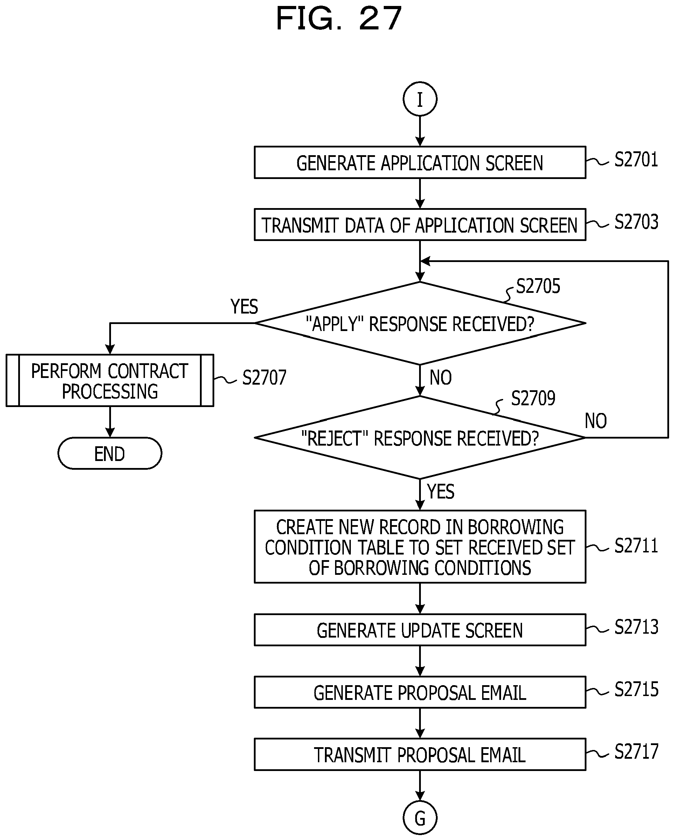

The description returns to the description of S2509. In a case where it is determined that an applicable set of lending conditions has been found, the processing proceeds to S2701 illustrated in FIG. 27 via a terminal I.

Now, FIG. 27 will be described. The proposal unit 815 generates data of an application screen (S2701). The data of the application screen illustrated in FIG. 5 is generated.

The proposal unit 815 transmits the data of the application screen to the borrower terminal 103 via the transmission unit 803 (S2703). The proposal unit 815 determines whether or not the reception unit 801 has received an "Apply" response from the borrower terminal 103 (S2705).

In a case where it is determined that the reception unit 801 has received an "Apply" response from the borrower terminal 103, the contract unit 819 performs contract processing (S2707). When the processing returns to the borrower processing from the contract processing, the borrower processing ends.

In a case where it is determined in S2705 that the reception unit 801 has not received an "Apply" response from the borrower terminal 103, the proposal unit 815 determines whether or not the reception unit 801 has received a "Reject" response from the borrower terminal 103. (S2709). In a case where it is determined that the reception unit 801 has not received a "Reject" response from the borrower terminal 103, the processing returns to S2705, and the above-described processing is repeated.

On the other hand, in a case where it is determined that the reception unit 801 has received a "Reject" response from the borrower terminal 103, the proposal unit 815 creates a new record in the borrowing condition table to set the set of borrowing conditions received in S2305 in FIG. 23 (S2711). At this time, the proposal unit 815 assigns a borrowing condition ID to the new record. Furthermore, the proposal unit 815 stores, into the new record, the borrower ID specified by the user authentication.

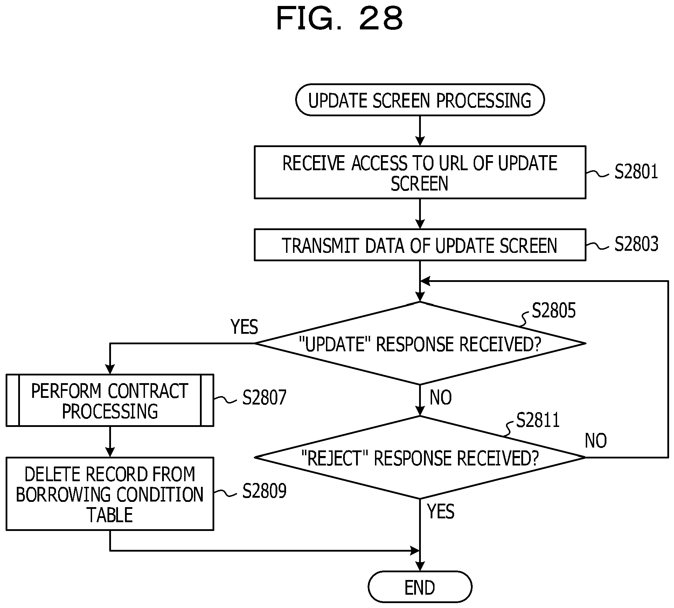

The proposal unit 815 generates data of an update screen (S2713). The data of the update screen illustrated in FIG. 6 is generated. At this time, the proposal unit 815 activates update screen processing. The update screen processing will be described later with reference to FIG. 28.

Moreover, the proposal unit 815 generates a proposal email with a link to the update screen (S2715). That is, the proposal email contains a URL of the update screen. The proposal email contains a message stating that a transaction will be settled if the set price is updated to the same amount as the desired price.

The proposal unit 815 transmits the proposal email, via the transmission unit 803, to the lender terminal 101 corresponding to the set of lending conditions determined to be applicable in the fourth search processing (S2717). Specifically, the email, with the lender's email address set as a destination, is sent to the email server. Then, the processing returns to S2213 illustrated in FIG. 22 via the terminal G, and the above-described processing is repeated.

Next, processing performed when the lender uses the link contained in the proposal email transmitted in S2717 in FIG. 27 to accesses the URL of the update screen from the lender terminal 101 will be described. FIG. 28 illustrates an update screen processing flow.

The access receiving unit 805 receives access to the URL of the update screen via the reception unit 801 (S2801). Here, it is assumed that the lender terminal 101 accesses the URL. Specifically, access to the URL of the update screen generated in S2713 is received. At this time, the access receiving unit 805 specifies a borrowing condition ID and a lending condition ID by using, for example, a parameter added to the URL. Then, a set of borrowing conditions is specified by the borrowing condition ID, and a set of lending conditions is specified by the lending condition ID.

The proposal unit 815 transmits the data of the update screen to the lender terminal 101 via the transmission unit 803 (S2803).

The proposal unit 815 determines whether or not the reception unit 801 has received an "Update" response from the lender terminal 101 (S2805).

In a case where it is determined that the reception unit 801 has received an "Update" response from the lender terminal 101, the contract unit 819 performs contract processing (S2807). Furthermore, the contract unit 819 deletes the record corresponding to the borrowing condition ID from the borrowing condition table (S2809). Then, the update screen processing ends.

In a case where it is determined in S2805 that the reception unit 801 has not received an "Update" response from the lender terminal 101, the proposal unit 815 determines whether or not the reception unit 801 has received a "Reject" response from the lender terminal 101. (S2811).

In a case where it is determined that the reception unit 801 has not received a "Reject" response from the lender terminal 101, the processing returns to S2805, and the above-described processing is repeated.

On the other hand, in a case where it is determined that the reception unit 801 has received a "Reject" response from the lender terminal 101, the update screen processing ends as it is.

Finally, processing performed when the borrower uses the link contained in the proposal email transmitted in S1611 in FIG. 16 or S2105 in FIG. 21 to access the URL of the application screen from the borrower terminal 103 will be described. FIG. 29 illustrates an application screen processing flow.

The access receiving unit 805 receives access to the URL of the application screen via the reception unit 801 (S2901). Here, it is assumed that the borrower terminal 103 accesses the URL. Note that in a case of the link contained in the proposal email transmitted in S1611 in FIG. 16, access to the URL of the application screen generated in S1607 is received. On the other hand, in a case of the link contained in the proposal email transmitted in S2105 in FIG. 21, access to the URL of the application screen generated in S2101 is received. At this time, the access receiving unit 805 specifies a borrowing condition ID and a lending condition ID by using, for example, a parameter added to the URL. Then, a set of borrowing conditions is specified by the borrowing condition ID, and a set of lending conditions is specified by the lending condition ID.

The proposal unit 815 transmits the data of the application screen to the borrower terminal 103 via the transmission unit 803 (S2903).

The proposal unit 815 determines whether or not the reception unit 801 has received an "Apply" response from the borrower terminal 103 (S2905).

In a case where it is determined that the reception unit 801 has received an "Apply" response from the borrower terminal 103, the contract unit 819 performs contract processing (S2907). Furthermore, the contract unit 819 deletes the record corresponding to the borrowing condition ID from the borrowing condition table (S2909). Then, the application screen processing ends.

In a case where it is determined in S2905 that the reception unit 801 has not received an "Apply" response from the borrower terminal 103, the proposal unit 815 determines whether or not the reception unit 801 has received a "Reject" response from the borrower terminal 103 (S2911).

In a case where it is determined that the reception unit 801 has not received a "Reject" response from the borrower terminal 103, the processing returns to S2905, and the above-described processing is repeated.

On the other hand, in a case where it is determined that the reception unit 801 has received a "Reject" response from the borrower terminal 103, the application screen processing ends as it is.

The present embodiment facilitates settlement of a transaction by suggesting a borrower or a lender to compromise. Note that a borrower is an example of a service recipient. Furthermore, a borrowing application is an example of an agreement with a service provider.

Here, an example related to a consideration for a service has been described. However, in a case of provision of a product, the present embodiment may be applied to a consideration for the product.

While the embodiment of the present invention has been described above, the present invention is not limited thereto. For example, the above-described functional block configuration may not match a program module configuration in some cases.

Furthermore, the configuration of each storage area described above is an example, and the configuration is not necessarily as described above. Moreover, as for the processing flow, the order of processing may be changed, or a plurality of pieces of processing may be performed in parallel, as long as the processing result does not change.

Note that the above-described mediation server 105 is a computer apparatus, in which a memory 2501, the CPU 2503, a hard disk drive (HDD) 2505, a display control unit 2507 connected to a display device 2509, a drive device 2513 for a removable disk 2511, an input device 2515, and a communication control unit 2517 for connecting to a network are connected by a bus 2519 as illustrated in FIG. 30. An operating system (OS) and an application program for carrying out the processing in the present working example are stored in the HDD 2505 and read from the HDD 2505 to the memory 2501 when executed by the CPU 2503. The CPU 2503 controls the display control unit 2507, the communication control unit 2517, and the drive device 2513 according to the processing content of the application program and causes these members to perform a predetermined operation. Furthermore, data in the middle of processing is mainly stored in the memory 2501, but may be stored in the HDD 2505. In the working example of the present invention, the application program for carrying out the above-described processing is stored in the computer-readable removable disk 2511 to be distributed and installed in the HDD 2505 from the drive device 2513. There is also a case where the application program is installed in the HDD 2505 by way of a network such as the Internet and the communication control unit 2517. Such a computer apparatus implements various functions as described above by organic cooperation between hardware such as the CPU 2503 and the memory 2501 and programs such as the OS and the application program described above.

The embodiment of the present invention described above is summarized as follows.

An information processing method according to the present embodiment includes the processes of (A) searching, upon receiving a set of conditions for being provided from a terminal of a recipient of a service or a product, a first storage unit that stores a plurality of sets of conditions for providing the service or the product, for a set of conditions for providing that matches the set of conditions for being provided, (B) transmitting, in a case where no set of conditions for providing that matches the set of conditions for being provided is found, to the terminal of the recipient, a first proposal data prompting a first agreement based on a set of conditions for providing selected from the first storage unit on the basis of the set of conditions for being provided, and (C) transmitting, in a case where it is determined that the recipient has rejected the first agreement, to a terminal of a provider who has registered the selected set of conditions for providing, a second proposal data prompting a second agreement based on the set of conditions for being provided.

This facilitates obtaining a compromise agreement from a recipient or a provider.

The information processing method described above may further include the process of (D) searching, upon receiving a set of conditions for providing from a terminal of a provider of the service or the product, a second storage unit that stores a plurality of sets of conditions for being provided with the service or the product, for a set of conditions for being provided that matches the set of conditions for providing. The information processing method described above may further include the process of (E) transmitting, in a case where no set of conditions for being provided that matches the set of conditions for providing is found, to the terminal of the provider, a third proposal data prompting a third agreement based on a set of conditions for being provided selected from the second storage unit on the basis of the set of conditions for providing. The information processing method described above may further include the process of (E) transmitting, in a case where it is determined that the provider has rejected the third agreement, to a terminal of a recipient who has registered the selected set of conditions for being provided, a fourth proposal data prompting a fourth agreement based on the set of conditions for providing.

This further facilitates obtaining a compromise agreement from a recipient or a provider.

Moreover, the set of conditions for providing may include a set fee for the service or the product. Furthermore, the set of conditions for being provided may include a desired fee for the service or the product.

This facilitates obtaining a compromise agreement from a recipient or a provider in terms of money.

Note that a program for causing a computer to perform the processing according to the above method can be created, and the program may be stored in, for example, a computer-readable storage medium or storage device, such as a flexible disk, a compact disk read only memory (CD-ROM), a magneto-optical disk, a semiconductor memory, or a hard disk. Note that an intermediate processing result is normally temporarily saved in a storage device such as a main memory.

## Claims

1. An information processing method, comprising the processes of:
searching, upon receiving a set of conditions for being provided from a terminal of a recipient of a service or a product, a first storage unit that stores a plurality of sets of conditions for providing the service or the product, for a set of conditions for providing that matches the set of conditions for being provided;
transmitting, in a case where no set of conditions for providing that matches the set of conditions for being provided is found, to the terminal of the recipient, a first proposal data prompting a first agreement based on a set of conditions for providing selected from the first storage unit on the basis of the set of conditions for being provided; and
transmitting, in a case where it is determined that the recipient has rejected the first agreement, to a terminal of a provider who has registered the selected set of conditions for providing, a second proposal data prompting a second agreement based on the set of conditions for being provided,
the information processing method being performed by a computer.

2. The information processing method according to claim 1, further comprising the processes of:
searching, upon receiving a set of conditions for providing from a terminal of a provider of the service or the product, a second storage unit that stores a plurality of sets of conditions for being provided with the service or the product, for a set of conditions for being provided that matches the set of conditions for providing;
transmitting, in a case where no set of conditions for being provided that matches the set of conditions for providing is found, to the terminal of the provider, a third proposal data prompting a third agreement based on a set of conditions for being provided selected from the second storage unit on the basis of the set of conditions for providing; and
transmitting, in a case where it is determined that the provider has rejected the third agreement, to a terminal of a recipient who has registered the selected set of conditions for being provided, a fourth proposal data prompting a fourth agreement based on the set of conditions for providing.

3. The information processing method according to claim 1 or 2, wherein
the set of conditions for providing includes a set fee for the service or the product, and
the set of conditions for being provided includes a desired fee for the service or the product.

4. A program that causes a computer to perform the processes of:
searching, upon receiving a set of conditions for being provided from a terminal of a recipient of a service or a product, a first storage unit that stores a plurality of sets of conditions for providing the service or the product, for a set of conditions for providing that matches the set of conditions for being provided;
transmitting, in a case where no set of conditions for providing that matches the set of conditions for being provided is found, to the terminal of the recipient, a first proposal data prompting a first agreement based on a set of conditions for providing selected from the first storage unit on the basis of the set of conditions for being provided; and
transmitting, in a case where it is determined that the recipient has rejected the first agreement, to a terminal of a provider who has registered the selected set of conditions for providing, a second proposal data prompting a second agreement based on the set of conditions for being provided.

5. An information processing apparatus comprising:
a search unit that searches, upon receiving a set of conditions for being provided from a terminal of a recipient of a service or a product, a first storage unit that stores a plurality of sets of conditions for providing the service or the product, for a set of conditions for providing that matches the set of conditions for being provided; and
a transmission unit that transmits, in a case where no set of conditions for providing that matches the set of conditions for being provided is found, to the terminal of the recipient, a first proposal data prompting a first agreement based on a set of conditions for providing selected from the first storage unit on the basis of the set of conditions for being provided, and transmits, in a case where it is determined that the recipient has rejected the first agreement, to a terminal of a provider who has registered the selected set of conditions for providing, a second proposal data prompting a second agreement based on the set of conditions for being provided.
